# EUROPEAN PATENT APPLICATION

(11) **EP 3 176 337 A1**
(43) Date of publication of application: **07.06.2017**
(21) Application number: 16185059.9
(22) Date of filing: 20.08.2016
(51) Int. Cl.: E03C 1/04, F16L 47/02, F16L 47/32, B29C 65/48, B29C 65/02

(54) **TEMPERATURE-ADJUSTABLE PLASTIC WATER PIPE CONNECTING STRUCTURE AND FOR METHOD FOR CONNECTING THE SAME**

(30) Priority: 04.12.2015 CN 201510880326
(71) Applicant: Xiamen Runner Industrial Corporation, Xiamen 361021 (CN)
(72) Inventor: Chen, Xi-Min, Xiamen, 361021 (CN); Lin, Xian-Hai, Xiamen, 361021 (CN); Lin, Feng, Xiamen, 361021 (CN)
(74) Representative: Cabinet Chaillot

(57) **Abstract**

A temperature-adjustable plastic water pipe connecting structure includes two vertical pipes (1) and a horizontal pipe (2). The vertical pipe (1) has a first threaded portion (101) formed on a top portion of the vertical pipe, a second threaded portion (102) formed on a bottom portion of the vertical pipe (1), and a bump (103) formed on a peripheral wall of the pipe and having an outlet (104). The horizontal pipe (2) has two ends and a connecting seat (202; 203; 204) mounted on the horizontal pipe (2). The two ends are respectively mounted into the outlets (104) of the two vertical pipes (1). The present invention has the advantages of a simplified connecting structure facilitating assembly of the temperature-adjustable plastic water pipe, significantly reducing the parts of the temperature-adjustable plastic water pipe and cost in production, and simplifying the manufacture.

## Description

### BACKGROUND OF THE INVENTION

### Field of the Invention

The present invention relates to a water pipe connecting structure and, more particularly, to a temperature-adjustable plastic water pipe connecting structure.

### Description of The Related Art

Conventional water pipes for connecting double-inlet faucet is formed by producing a cast copper blank and machining the cast copper blank through complicated processes. Because of shortage in sources of copper, high machining cost, and low yield, the cast copper water pipes are expensive accordingly. Therefore, people attempt to use plastic materials to replace copper and mass-produced plastic production processes to replace complicated machining processes to produce plastic water pipe for connecting temperature-adjustable faucet. However, the conventional plastic water pipes made by plastic have complex structure, numerous parts, and use seal and bolts and the like, not only rendering production difficulty and inventory problem in logistics management but also causing complicated production processes and dramatic waste in labor, material and money.

### SUMMARY OF THE INVENTION

In view of the problems and drawbacks of the prior art, the objective of the present invention is to provides a temperature-adjustable plastic water pipe connecting structure and a method for connecting the same.

To achieve the foregoing objective, the temperature-adjustable plastic water pipe connecting structure includes two vertical pipes and a horizontal pipe.

Each vertical pipe has a first threaded portion, a second threaded portion and a bump.

The first threaded portion is formed on a top portion of a peripheral wall of the vertical pipe and is adapted to connect with a faucet.

The second threaded portion is formed on a bottom portion of the peripheral wall of the vertical pipe for fastening the vertical pipe.

The bump is formed on the peripheral wall of the vertical pipe, is located between the first threaded portion and the second threaded portion, and has an outlet formed in a free end of the bump and communicating with an inner space of the vertical pipe.

The horizontal pipe has two ends and a connecting seat.

The two ends are respectively mounted into the outlets of the two vertical pipes. End faces of the two ends of the horizontal pipe and end faces of free ends of the bumps of the vertical pipes are hermetically connected.

The connecting seat is mounted on a peripheral wall of the horizontal pipe and has at least one outlet formed in the connecting seat and communicating with an inner space of the horizontal pipe.

Preferably, the horizontal pipe has two flanges respectively and annularly formed around the peripheral wall of the horizontal pipe, being adjacent to two end edge portions of the horizontal pipe, and hermetically connected with the bumps of the two vertical pipes through plastic welding.

Preferably, the connecting seat is a dual-outlet coupler, a single-outlet threaded coupler, or a single-outlet snap coupler.

Preferably, the horizontal pipe is straight, angled, or arcuate.

Preferably, the connecting seat is mounted on a top portion of the peripheral wall of the horizontal pipe, is mounted beside the horizontal pipe, or is mounted in the connecting pipe.

Preferably, the end faces of the two ends of the horizontal pipe and the end faces of the bumps of the vertical pipes are matching surface for joining to each other.

To achieve the foregoing objective, the method for connecting the temperature-adjustable plastic water pipe connecting structure includes steps of:
cleaning up end faces of the bumps of the two vertical pipes and the horizontal pipe;
fixing the vertical pipes and the horizontal with a fixture and aligning and joining the end faces of the bumps of the vertical pipes and the horizontal pipe;
using a plastic welding machine or applying adhesive to bind the end faces of the bumps of the vertical pipes and the horizontal pipe; and
performing a seal test on the connected vertical pipes and the horizontal pipe of the temperature-adjustable plastic water pipe connecting structure welding machine.

Preferably, the plastic welding machine is a plastic thermal welding machine, the plastic thermal welding machine is used to heat the flanges of the horizontal pipe to melt the end surfaces of the horizontal pipe and is used to heat and melt the end faces of the bumps of the vertical pipe, two ends of the horizontal pipe are inserted into the bump of the vertical pipes through the outlet, and the vertical pipes and the horizontal pipe are joined to each other in completion of the welding.

Preferably, a heating time is in a range of 6 to 7 seconds, a welding temperature is in a range of 380°C to 450°C, and a welding time is in a range of 6 to 7 seconds

In contrast to conventional technique, the present invention has the advantages of a simplified connecting structure facilitating assembly of the temperature-adjustable plastic water pipe, significantly reducing the part number of the temperature-adjustable plastic water pipe and cost in production, and simplifying the manufacture.

### BRIFE DESCRIPTION OF THE DRAWINGS

The detailed description of the drawings particularly refers to the accompanying figures in which:
Fig. 1 is a perspective view of an embodiment of a temperature-adjustable plastic water pipe connecting structure with a dual-outlet coupler in accordance with the present invention;
Fig. 2 is a perspective view of the temperature-adjustable plastic water pipe connecting structure with a single-outlet threaded coupler in Fig.1;
Fig. 3 is a perspective view of the temperature-adjustable plastic water pipe connecting structure with a single-outlet snap coupler in Fig.1;
Fig. 4 is a perspective view of another embodiment of a temperature-adjustable plastic water pipe connecting structure with opposite connection portions in accordance with the present invention;
Fig. 5 is a perspective view of the temperature-adjustable plastic water pipe connecting structure with a single-outlet threaded coupler in Fig.4; and
Fig. 6 is a perspective view of the temperature-adjustable plastic water pipe connecting structure with a single-outlet snap coupler in Fig.4.

### DETAILED DESCRIPTION OF THE INVENTION

The purpose, construction, features, functions and advantages of the present invention can be appreciated and understood more thoroughly through the following detailed description with reference to the attached drawings.

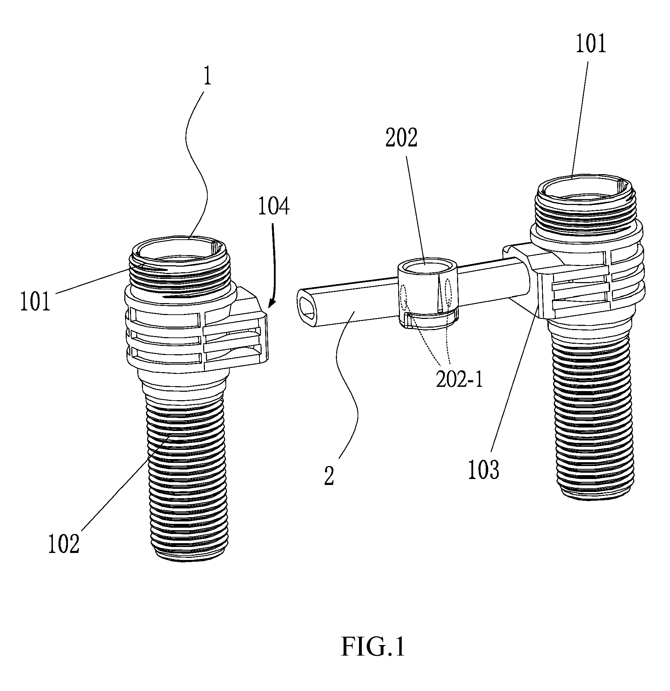

With reference to Figs. 1 to 3, an embodiment of a temperature-adjustable plastic water pipe connecting structure in accordance with the present invention includes two vertical pipes 1 and a horizontal pipe 2.

Each vertical pipe 1 has a first threaded portion 101, a second threaded portion 102 formed on a bottom portion of the peripheral wall of the vertical pipe 1, and a bump 103. The first threaded portion 101 is formed on a top portion of a peripheral wall of the vertical pipe 1 and is connected with a faucet. The second threaded portion 102 is used for fastening the vertical pipe 1. The bump 103 is formed on the peripheral wall of the vertical pipe 1, is located between the first threaded portion 101 and the second threaded portion 102, extends perpendicularly outwards from the peripheral wall of the vertical pipe 1 and has an outlet 104 formed in a free end of the bump 103 and communicating with an inner space of the vertical pipe 1.

The horizontal pipe 2 has two ends and a connecting seat 202. The two ends of the horizontal pipe 2 are respectively mounted into the outlets 104 of the two vertical pipes 1. End faces of the two ends of the horizontal pipe 2 and end faces of free ends of the bumps 103 of the vertical pipes 1 are matching surface for joining to each other and are tightly and hermetically connected.

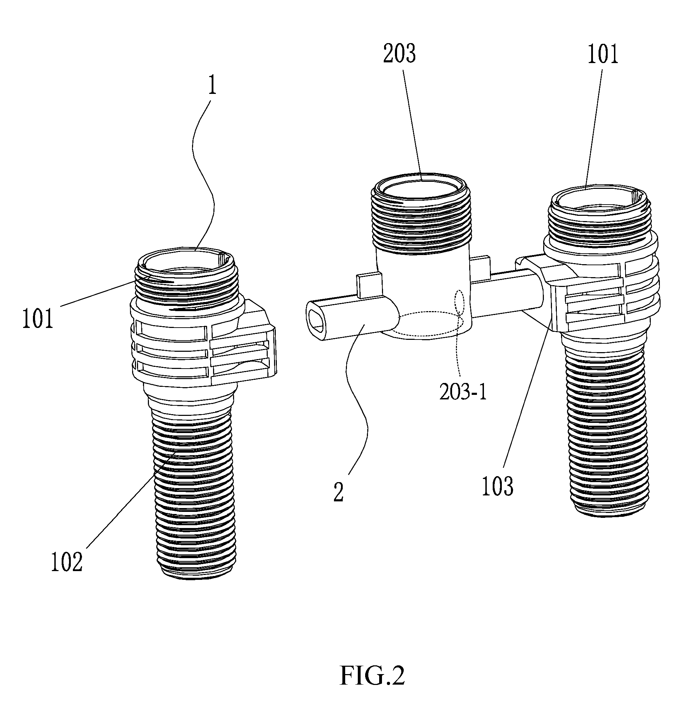

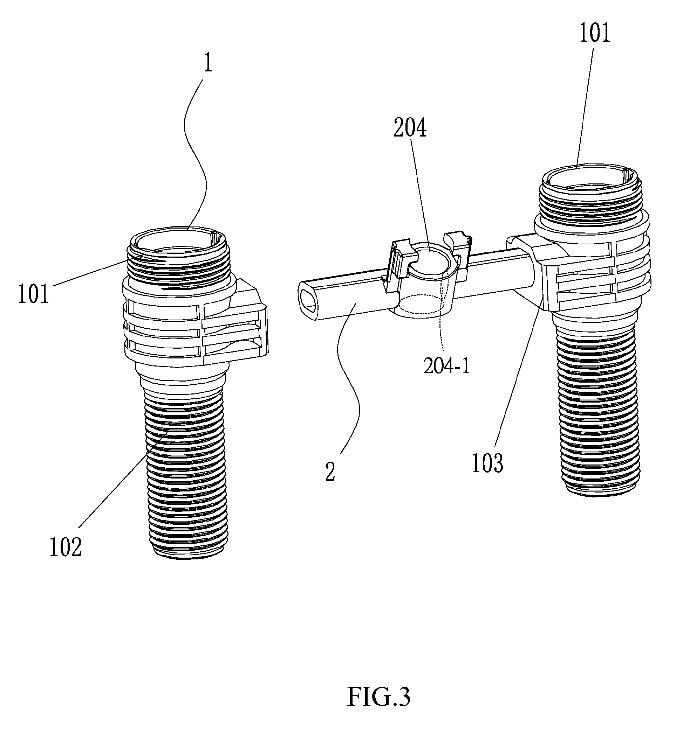

The horizontal pipe 2 is straight, angled, or arcuate. The connecting seat 202 is formed on a peripheral wall of the horizontal pipe 2 and may be a dual-outlet coupler 202 as shown in Fig. 1, a single-outlet threaded coupler 203 as shown in Fig. 2 or a single-outlet snap coupler 204 as shown in Fig. 3. The dual-outlet coupler 202 is formed beside central of the horizontal pipe 2, and has two outlets 202-1 oppositely formed through the dual-outlet coupler 202, communicating with an inner space of the horizontal pipe 2, and connected with two faucets. The single-outlet threaded coupler 203 is formed on a top portion of the peripheral wall of the horizontal pipe 2, and has a threaded portion and an outlet 203-1. The threaded portion is externally formed on one of two ends of the single-outlet threaded coupler 203 for connection with a faucet. The outlet 203-1 is formed in the end with the threaded portion and communicating with the inner space of the horizontal pipe 2. The single-outlet snap coupler 204 is formed in the central of the horizontal pipe 2 and is attached on the peripheral wall of the horizontal pipe 2 and has an outlet 204-1 formed in the single-outlet snap coupler 204 and communicating with the inner space of the horizontal pipe 2.

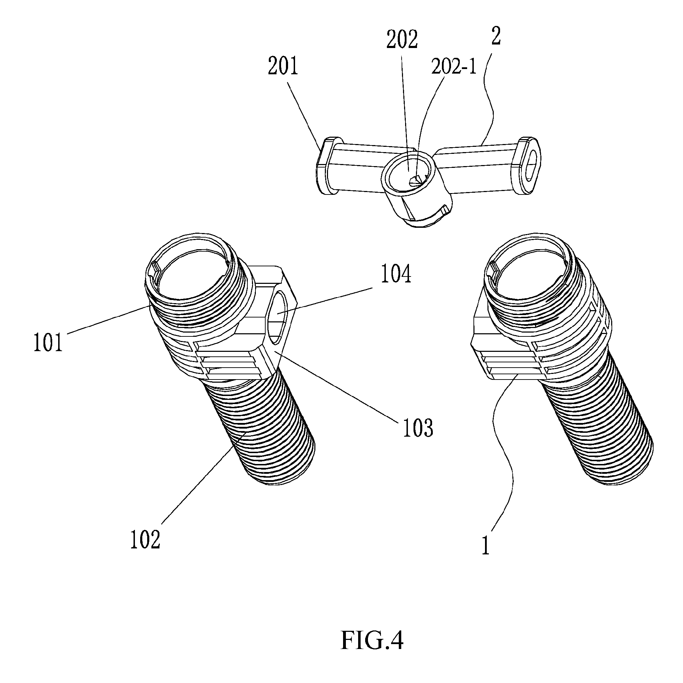

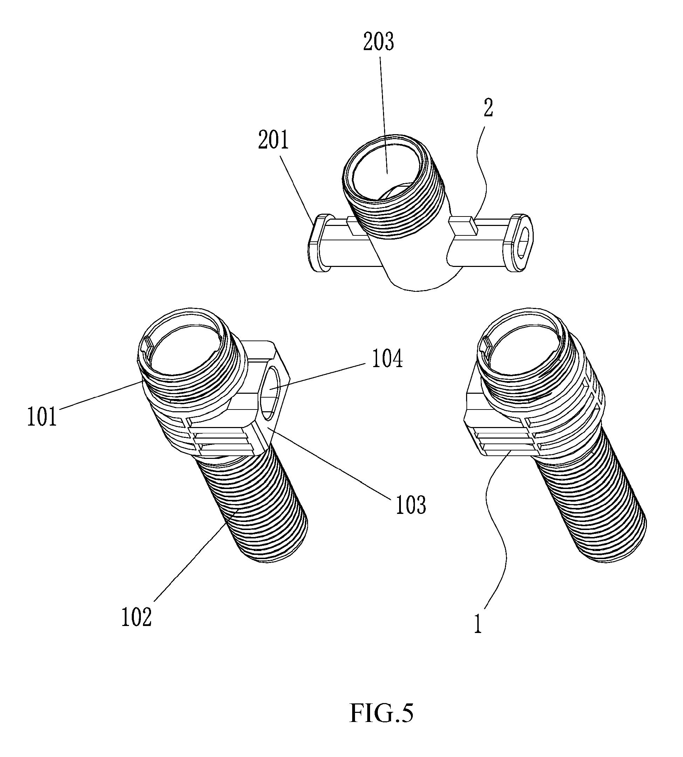

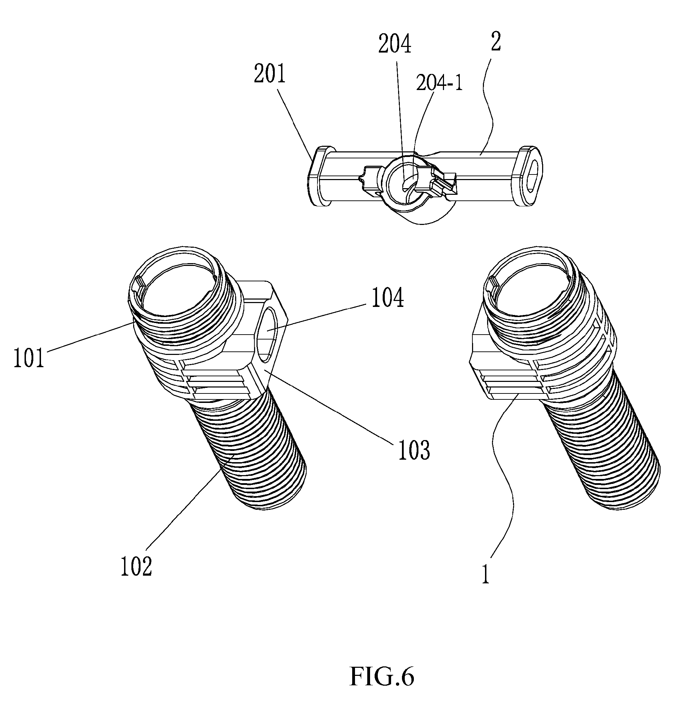

With reference to Figs. 4 to 6, another embodiment of a temperature-adjustable plastic water pipe connecting structure in accordance with the present invention differs from the foregoing embodiment in the horizontal pipe 2. The horizontal pipe 2 further has two flanges 201 respectively and annularly formed around the peripheral wall of the horizontal pipe 2, being adjacent to two end edge portions of the horizontal pipe 2, hermetically connected with the bumps 103 of the two vertical pipes 1 through tight connection to enhance coupling and sealing effect.

A method for connecting a temperature-adjustable plastic water pipe connecting structure in accordance with the present invention includes the following steps. Step 1: Clean up end faces of the bumps 103 of the two vertical pipes 1 and the horizontal pipe 2. Step 2: Fix the vertical pipes 1 and the horizontal 2 with a fixture and align and join the end faces of the bumps 103 of the vertical pipes 1 and the horizontal pipe 2. Step 3: Use a plastic welding machine or apply adhesive to bind the end faces of the bumps 103 of the vertical pipes 1 and the horizontal pipe 2. Step 4: Perform a seal test on the connected vertical pipes 1 and the horizontal pipe 2 of the temperature-adjustable plastic water pipe connecting structure.

In step 3, connection of the bumps 103 of the vertical pipes 1 and the flanges of the horizontal pipe 2 is done through a plastic thermal welding machine. First, the plastic thermal welding machine is used to heat the flanges of the horizontal pipe 1 to melt the end surfaces of the horizontal pipe 1. At the same time, the plastic thermal welding machine is used to heat and melt the end faces of the bumps 103 of the vertical pipe 1. Further, two ends of the horizontal pipe 2 are inserted into the bump 103 of the vertical pipes 1 through the outlet 104, and the vertical pipes 1 and the horizontal pipe 2 are tightly joined in completion of the welding.

In the present embodiment, the heating time is 6 to 7 seconds, a welding temperature is 380°C to 450°C, and a welding time is 6 to 7 seconds.

## Claims

1. A temperature-adjustable plastic water pipe connecting structure, comprising:
two vertical pipes, each vertical pipe having:
a first threaded portion formed on a top portion of a peripheral wall of the vertical pipe and adapted to connect with a faucet;
a second threaded portion formed on a bottom portion of the peripheral wall of the vertical pipe for fastening the vertical pipe; and
a bump formed on the peripheral wall of the vertical pipe, located between the first threaded portion and the second threaded portion, and having an outlet formed in a free end of the bump and communicating with an inner space of the vertical pipe;
a horizontal pipe having:
two ends respectively mounted into the outlets of the two vertical pipes, wherein end faces of the two ends of the horizontal pipe and end faces of free ends of the bumps of the vertical pipes are hermetically connected; and
a connecting seat mounted on a peripheral wall of the horizontal pipe and having at least one outlet formed in the connecting seat and communicating with an inner space of the horizontal pipe.

2. The temperature-adjustable plastic water pipe connecting structure as claimed in claim 1, wherein the horizontal pipe has two flanges respectively and annularly formed around the peripheral wall of the horizontal pipe, being adjacent to two end edge portions of the horizontal pipe, and hermetically connected with the bumps of the two vertical pipes through plastic welding.

3. The temperature-adjustable plastic water pipe connecting structure as claimed in claim 1, wherein the connecting seat is a dual-outlet coupler, a single-outlet threaded coupler, or a single-outlet snap coupler.

4. The temperature-adjustable plastic water pipe connecting structure as claimed in claim 1, wherein the horizontal pipe is straight, angled, or arcuate.

5. The temperature-adjustable plastic water pipe connecting structure as claimed in claim 4, wherein the connecting seat is mounted on a top portion of the peripheral wall of the horizontal pipe, is mounted beside the horizontal pipe, or is mounted in the connecting pipe.

6. The temperature-adjustable plastic water pipe connecting structure as claimed in claim 1, wherein the end faces of the two ends of the horizontal pipe and the end faces of the bumps of the vertical pipes are matching surface for joining to each other.

7. A method for connecting the temperature-adjustable plastic water pipe connecting structure as claimed in claim 1, comprising steps of:
cleaning up end faces of the bumps of the two vertical pipes and the horizontal pipe;
fixing the vertical pipes and the horizontal with a fixture and aligning and joining the end faces of the bumps of the vertical pipes and the horizontal pipe;
using a plastic welding machine or applying adhesive to bind the end faces of the bumps of the vertical pipes and the horizontal pipe; and
performing a seal test on the connected vertical pipes and the horizontal pipe of the temperature-adjustable plastic water pipe connecting structure welding machine.

8. The method as claimed in claim 7, wherein the plastic welding machine is a plastic thermal welding machine, the plastic thermal welding machine is used to heat the flanges of the horizontal pipe to melt the end surfaces of the horizontal pipe and is used to heat and melt the end faces of the bumps of the vertical pipe, two ends of the horizontal pipe are inserted into the bump of the vertical pipes through the outlet, and the vertical pipes and the horizontal pipe are joined to each other in completion of the welding.

9. The method as claimed in claim 7, wherein, a heating time is in a range of 6 to 7 seconds, a welding temperature is in a range of 380°C to 450°C, and a welding time is in a range of 6 to 7 seconds.
